# EUROPÄISCHE PATENTANMELDUNG

(11) **EP 4 173 855 A1**
(43) Veröffentlichungstag der Anmeldung: **03.05.2023**
(21) Anmeldenummer: 22200101.8
(22) Anmeldetag: 06.10.2022
(51) Int. Cl.: B60D 1/155, B62B 5/06

(54) **ANHÄNGEVORRICHTUNG UND AUFNAHMEVORRICHTUNG**

(30) Priorität: 28.10.2021 DE 102021212210
(71) Anmelder: B.Pro GmbH, 75038 Oberderdingen (DE)
(72) Erfinder: Böß, Ralf, 76703 Kraichtal (DE)
(74) Vertreter: Ullrich & Naumann PartG mbB

(57) **Zusammenfassung**

Die Erfindung betrifft eine Anhängevorrichtung zur Festlegung an einem Wagen, umfassend
ein erstes Teil, welches mit dem Wagen verbindbar ist, und
ein zweites Teil, welches an einem weiteren Wagen festlegbar ist, wobei das zweite Teil relativ zum ersten Teil zwischen einer ersten eingefahrenen Position und einer zweiten ausgefahrenen Position verschiebbar ist und wobei eine Halteeinrichtung angeordnet ist, welche ausgebildet ist, das zweite Teil in der zweiten Position zu halten, wobei
eine bewegbare Sicherung angeordnet ist, welche ausgebildet ist, die Halteeinrichtung lösbar zu sichern, sodass bei Einwirken von Längsdruckkräften auf den zweiten Teil, der zweite Teil in der zweiten Position gehalten wird.

## Beschreibung

Die Erfindung betrifft eine Anhängevorrichtung zur Festlegung an einem Wagen, umfassend
ein erstes Teil, welches mit dem Wagen verbindbar ist, und
ein zweites Teil, welches an einem weiteren Wagen festlegbar ist, wobei
das zweite Teil relativ zum ersten Teil zwischen einer ersten eingefahrenen Position und einer zweiten ausgefahrenen Position verschiebbar ist und wobei
eine Halteeinrichtung angeordnet ist, welche ausgebildet ist, das zweite Teil in der zweiten Position zu halten.

Die Erfindung betrifft weiter eine Aufnahmevorrichtung zur Aufnahme eines zweiten Teils einer Anhängevorrichtung.

Die Erfindung betrifft weiter ein System, umfassend eine Anhängevorrichtung und eine Aufnahmevorrichtung.

Die Erfindung betrifft darüber hinaus einen Wagen zum Transport von Gütern und dergleichen, umfassend eine Anhängevorrichtung und/oder eine Aufnahmevorrichtung sowie ein System aus zumindest zwei Wagen.

Obwohl auf beliebige Anhängevorrichtungen anwendbar, wird die vorliegende Erfindung in Bezug auf Anhängevorrichtungen für Wagen zur Lagerung von Waren, wie Lebensmitteln und dergleichen, beschrieben.

Auf Großveranstaltungen wie Messen und dergleichen oder in Großküchen werden fahrbare Wagen zum Transport von Lebensmitteln verwendet. Diese werden üblicherweise durch Anhängevorrichtungen miteinander gekoppelt, so dass sich ein Wagenverbund ergibt, der auch von einer ziehenden Person oder einem Zugfahrzeug gezogen werden kann. Hierzu werden die Wagen über Anhängevorrichtungen auf dem nachlaufenden Wagen und entsprechenden Aufnahmevorrichtungen an dem vorlaufenden Wagen miteinander gekoppelt. Die Anhängevorrichtung wird beispielsweise in die Aufnahmevorrichtung eingehängt. Nachteilig dabei ist, dass beim Überfahren von Bodenunebenheiten die Anhängevorrichtung unerwünschte Vertikalbewegungen durchführen kann und sich die Anhängevorrichtung und Aufnahmevorrichtung voneinander lösen können. Darüber hinaus wird die Anhängevorrichtung durch ein Gelenk an der Vorderseite des Wagens befestigt, wodurch diese, auch wenn der Wagen nicht benutzt wird, hochgeklappt und gesichert werden muss und auch noch Bauraum außerhalb des Wagens beansprucht.

Zur Lösung dieses Problems ist aus der EP 2 744 673 B1 eine Anhängerkupplungsbaugruppe zur Befestigung an einem beweglichen Container bekannt geworden, wobei die Anhängerkupplungsbaugruppe Folgendes beinhaltet:
einen ersten Teil, der mit dem beweglichen Behälter verbindbar ist;
einen zweiten Teil, der an einem angrenzenden Container oder einem Zugfahrzeug anbringbar ist, wobei der zweite Teil relativ zum ersten Teil zwischen einer ersten eingefahrenen Konfiguration und einer zweiten ausgefahrenen Konfiguration gleitend bewegbar ist; und
eine Fangvorrichtung zum Halten des zweiten Teils in der zweiten Konfiguration, wobei die Rastvorrichtung mindestens ein Rastelement an einem der Teile umfasst, wobei das oder jedes Rastelement eine Rastformation umfasst, mit der eine Formation an dem anderen der Teile in der zweiten Konfiguration eingreift, wobei die oder jede Rastformation aufweist: eine Konfiguration, um die Formation an dem anderen der Teile darin beizubehalten, wenn der zweite Teil der Baugruppe Längsdruckkräften ausgesetzt ist, wobei die oder jede Rastformation eine Haltelippe aufweist.

Nachteilig hierbei ist wiederum, dass die Fangvorrichtung lediglich unzuverlässig das zweite Teil in der zweiten Konfiguration festlegen kann. Darüber hinaus kann keine definierte Bewegung für die Lösung des zweiten Teils aus der Fangvorrichtung und zum Verbringen des zweiten Teils in die eingefahrene Konfiguration bereitgestellt werden.

Eine Aufgabe der vorliegenden Erfindung ist es daher, eine Anhängevorrichtung, eine Aufnahmevorrichtung, ein System und einen Wagen anzugeben, die eine einfachere Bedienung bei gleichzeitig zuverlässigerer lösbarer Festlegung des zweiten Teils in der ausgefahrenen Position bereitstellen.

Eine weitere Aufgabe der vorliegenden Erfindung ist es, eine alternative Anhängevorrichtung, eine alternative Aufnahmevorrichtung, ein alternatives System und einen alternativen Wagen anzugeben.

In einer Ausführungsform löst die vorliegende Erfindung die vorstehend genannten Aufgaben bei einer Anhängevorrichtung zur Festlegung an einem Wagen, umfassend ein erstes Teil, welches mit dem Wagen verbindbar ist, und
ein zweites Teil, welches an einem weiteren Wagen festlegbar ist, wobei
das zweite Teil relativ zum ersten Teil zwischen einer ersten eingefahrenen Position und einer zweiten ausgefahrenen Position verschiebbar ist und wobei
eine Halteeinrichtung angeordnet ist, welche ausgebildet ist, das zweite Teil in der zweiten Position zu halten,
   dadurch, dass
eine bewegbare Sicherung angeordnet ist, welche ausgebildet ist, die Halteeinrichtung lösbar zu sichern, sodass bei Einwirken von Längsdruckkräften auf den zweiten Teil, der zweite Teil in der zweiten Position gehalten wird.

In einer Ausführungsform löst die vorliegende Erfindung die vorstehend genannten Aufgaben bei einer Aufnahmevorrichtung zur Aufnahme eines zweiten Teils einer Anhängevorrichtung gemäß einem der Ansprüche 1-11, dadurch, dass die Aufnahmevorrichtung und der zweite Teil der Anhängevorrichtung zur formschlüssigen lösbaren Festlegung aneinander ausgebildet sind.

In einer Ausführungsform löst die vorliegende Erfindung die vorstehend genannten Aufgaben mit einem System, umfassend eine Anhängevorrichtung gemäß einem der Ansprüche 1-11 und eine Aufnahmevorrichtung gemäß einem der Ansprüche 12-17.

In einer Ausführungsform löst die vorliegende Erfindung die vorstehend genannten Aufgaben mit einem Wagen zum Transport von Gütern und dergleichen, umfassend eine Anhängevorrichtung gemäß einem der Ansprüche 1-11 und/oder eine Aufnahmevorrichtung gemäß einem der Ansprüche 12-17, insbesondere wobei die Anhängevorrichtung und/oder die Aufnahmevorrichtung auf einer Unterseite des Wagens angeordnet ist, vorzugsweise wobei sich diese entlang der gesamten Unterseite des Wagens erstreckt.

In einer Ausführungsform löst die vorliegende Erfindung die vorstehend genannten Aufgaben mit einem System aus zumindest zwei Wagen gemäß Anspruch 21, die mittels des zweiten Teils der Anhängevorrichtung des einen der zumindest zwei Wagen an der Aufnahmevorrichtung des anderen der zumindest zwei Wagen gekoppelt sind.

Einer der damit erzielten Vorteile ist, dass damit eine einfache und platzsparende Aufbewahrung der Aufnahmevorrichtung ermöglicht wird. Ein weiterer Vorteil ist, dass eine besonders zuverlässige Festlegung des zweiten Teils in der ausgefahrenen Position ermöglicht wird, bei gleichzeitig einfacher definierter Lösbarkeit aus der gesicherten ausgefahrenen Position.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist die Sicherung so ausgebildet, dass diese bei Verbringen des zweiten Teils in die zweite Position zur Sicherung der Halteeinrichtung betätigt wird. Vorteil hiervon ist eine besonders zuverlässige automatische Betätigung der Sicherung.

Gemäß einer weiteren vorteilhaften Weiterbildung der Erfindung ist die Sicherung manuell lösbar ausgebildet. Dies ermöglicht eine einfache und kostengünstige Herstellung der Sicherung.

Gemäß einer weiteren vorteilhaften Weiterbildung der Erfindung ist die Sicherung ausgebildet, durch Betätigung des zweiten Teils, insbesondere durch Verkippen, die Halteeinrichtung freizugeben, sodass der zweite Teil in die erste Position verschiebbar ist. Damit wird eine besonders einfache Freigabe der Sicherung durch eine definierte Bewegung ermöglicht, was insgesamt die Bedienung vereinfacht.

Gemäß einer weiteren vorteilhaften Weiterbildung der Erfindung weist die Sicherung zumindest eine Feder zum lösbaren Halten der Sicherung in ihrer Sicherungsposition auf. Dies erhöht die Sicherheit beim Festlegen des zweiten Teils in der Sicherung, da zum Verlassen der Sicherungsposition Federkraft überwunden werden muss.

Gemäß einer weiteren vorteilhaften Weiterbildung der Erfindung ist die Sicherung derart ausgebildet, dass beim Verschieben des zweiten Teils in die zweite Position, die Sicherung entgegen der Federkraft der zumindest einen Feder zum Lösen betätigt wird. Damit wird einerseits einem Benutzer eine haptische Rückmeldung gegeben, andererseits wird die Sicherung automatisch betätigt. Zusätzliche Handgriffe durch einen Benutzer sind nicht notwendig.

Gemäß einer weiteren vorteilhaften Weiterbildung der Erfindung weist die Halteeinrichtung eine Aufnahme zum formschlüssigen Aufnehmen zumindest eines ersten Teilbereiches des zweiten Teils auf und wobei mittels der Sicherung die Aufnahme lösbar verschließbar ist. Damit wird auf einfache Weise eine mittels der Sicherung sicherbare Position für den zweiten Teil bereitgestellt.

Gemäß einer weiteren vorteilhaften Weiterbildung der Erfindung ist eine Rückhalteeinrichtung für die erste Position angeordnet. Damit wird ein versehentliches Herausrutschen des zweiten Teils, beispielsweise auf Grund von Bodenunebenheiten, vermieden.

Gemäß einer weiteren vorteilhaften Weiterbildung der Erfindung ist die Rückhalteeinrichtung in Form einer Senke ausgebildet, in die zumindest ein zweiter Teilbereich des zweiten Teils eingreift, insbesondere wobei erster und zweiter Teil einen gemeinsamen Teilbereich bilden. Vorteil hiervon ist eine kostengünstige, einfache und gleichzeitig zuverlässige Bereitstellung einer Rückhalteeinrichtung.

Gemäß einer weiteren vorteilhaften Weiterbildung der Erfindung sind erster Teilbereich und/oder zweiter Teilbereich in Form eines Bolzens ausgebildet. Vorteil hiervon ist, dass die Teilbereiche einfach herstellbar sind und zuverlässig mit der Rückhalteeinrichtung zusammenwirken können.

Gemäß einer weiteren vorteilhaften Weiterbildung der Erfindung weist das zweite Teil eine Aussparung zum Eingriff eines Elements einer Aufnahmevorrichtung auf, insbesondere in Form eines Bolzens. Vorteil hiervon ist eine kostengünstige Ausbildung des zweiten Teils zur Festlegung an der Aufnahmevorrichtung.

Gemäß einer vorteilhaften Weiterbildung der Aufnahmevorrichtung ist eine bewegbare Aufnahmesicherungseinrichtung zur insbesondere formschlüssigen Sicherung der Aufnahmevorrichtung angeordnet. Damit wird eine zuverlässige Festlegung des zweiten Teils an oder in der Aufnahmevorrichtung ermöglicht.

Gemäß einer weiteren vorteilhaften Weiterbildung der Aufnahmevorrichtung ist die Aufnahmesicherungseinrichtung so angeordnet, sodass diese bei Verbringen des zweiten Teils der Anhängevorrichtung in die Aufnahmevorrichtung betätigt wird, insbesondere entgegen einer Federkraft zumindest einer Feder. Damit wird automatisch eine zuverlässige Sicherung ermöglicht, ohne dass ein Benutzer separate Elemente oder dergleichen zur Sicherung betätigen muss.

Gemäß einer weiteren vorteilhaften Weiterbildung der Aufnahmevorrichtung ist diese so ausgebildet, dass das Festlegen des zweiten Teils an der Anhängevorrichtung entgegen der Richtung der Schwerkraft erfolgt. Damit wird eine einfache Festlegung ermöglicht.

Gemäß einer weiteren vorteilhaften Weiterbildung der Aufnahmevorrichtung weist diese zumindest einen Bereich auf, der mit geräuschdämpfendem Material, insbesondere aus Kunststoff, versehen oder daraus hergestellt ist und der insbesondere so angeordnet ist, dass dieser zumindest zeitweise während der Festlegung des zweiten Teils der Anhängevorrichtung an der Aufnahmevorrichtung von dem zweiten Teil beaufschlagt wird. Damit werden störende Geräusche während der Festlegung von dem zweiten Teil in der Aufnahmevorrichtung vermieden.

Gemäß einer weiteren vorteilhaften Weiterbildung der Aufnahmevorrichtung weist die Aufnahmesicherungseinrichtung eine Fläche zur Lösung derselben auf, insbesondere ausgebildet zur Betätigung mit einem Fuß. Damit wird eine einfache Betätigung der Lösung der Aufnahmesicherungseinrichtung bereitgestellt.

Gemäß einer weiteren vorteilhaften Weiterbildung des Systems sind Anhängevorrichtung und Aufnahmevorrichtung in einem einzigen Bauteil angeordnet. Vorteil hiervon ist eine einfache Festlegung des Bauteils, beispielsweise an einem Wagen, da die Vorrichtungen nicht aufwendig zueinander ausgerichtet und separat am Wagen angeordnet werden müssen.

Gemäß einer weiteren vorteilhaften Weiterbildung des Systems sind zumindest eine der beiden Vorrichtungen, insbesondere beide Vorrichtungen, als Modul für einen Wagen nachrüstbar. Vorteil hiervon ist eine schnelle Aufrüstung von Wagen, die noch nicht mit den beiden Vorrichtungen versehen sind.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: ein System gemäß einer Ausführungsform der vorliegenden Erfindung;
- Figur 2: einen Wagen gemäß einer Ausführungsform der vorliegenden Erfindung;
- Figur 3: eine Anhängevorrichtung gemäß einer Ausführungsform der vorliegenden Erfindung mit zweitem Teil in der ersten Position;
- Figur 4: die Anhängevorrichtung gemäß Figur 3 mit zweiten Teil in der zweiten Position.
- Figur 5: eine Sicherung gemäß einer Ausführungsform der vorliegenden Erfindung in ihrer geöffneten Position;
- Figur 6: die Sicherung gemäß Figur 5 in ihrer geschlossenen Position;
- Figur 7: die Anhängevorrichtung gemäß einer Ausführungsform der vorliegenden Erfindung während des Öffnens der Sicherung;
- Figur 8: eine Aufnahmevorrichtung gemäß einer Ausführungsform der vorliegenden Erfindung;
- Figur 9: eine Aufnahmevorrichtung gemäß einer Ausführungsform der vorliegenden Erfindung während des Festlegens des zweiten Teils;
- Figur 10: die Aufnahmevorrichtung gemäß Figur 9 mit festgelegtem zweiten Teil an der Aufnahmevorrichtung; und
- Figur 11: die Aufnahmevorrichtung gemäß Figur 9 und 10 mit festgelegtem und gesichertem zweiten Teil an der Aufnahmevorrichtung.

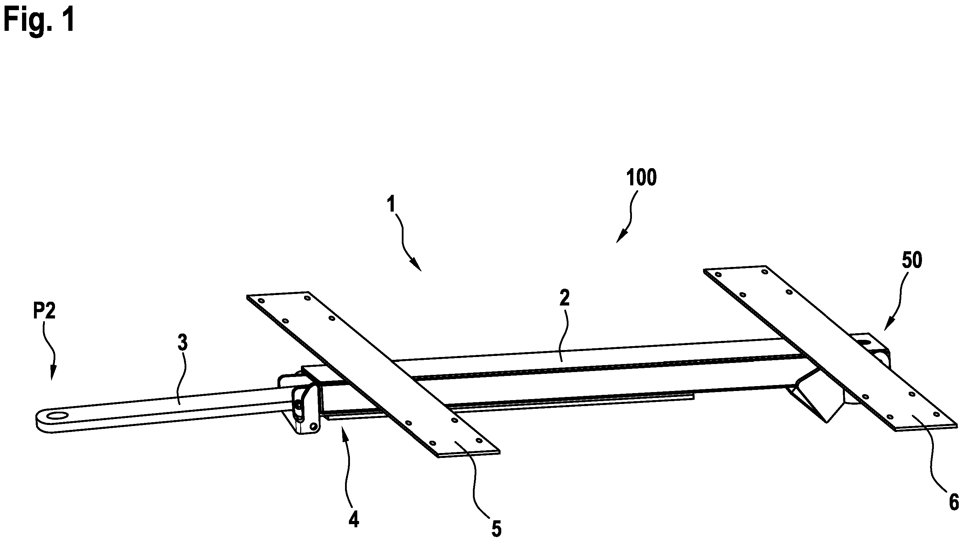

Figur 1 zeigt ein System gemäß einer Ausführungsform der vorliegenden Erfindung.

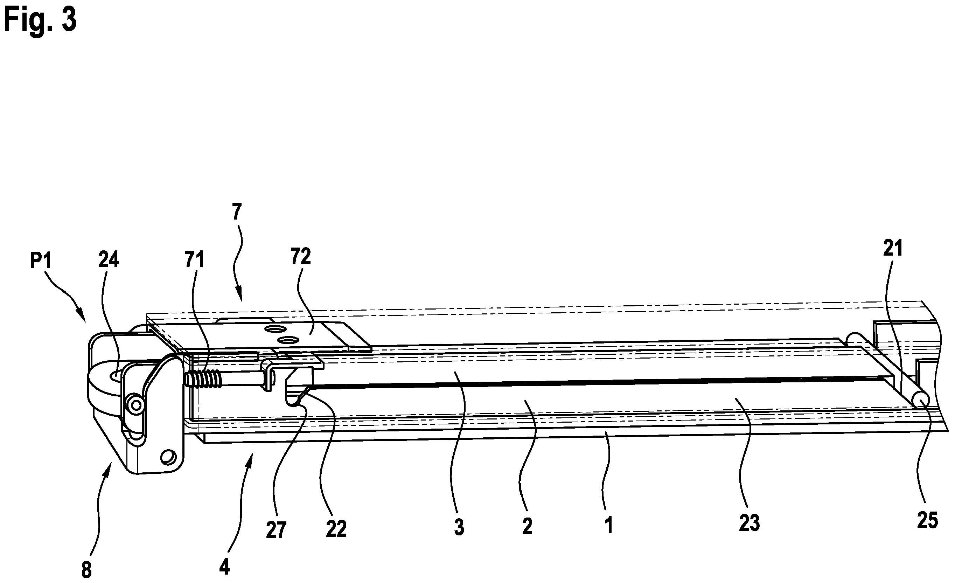

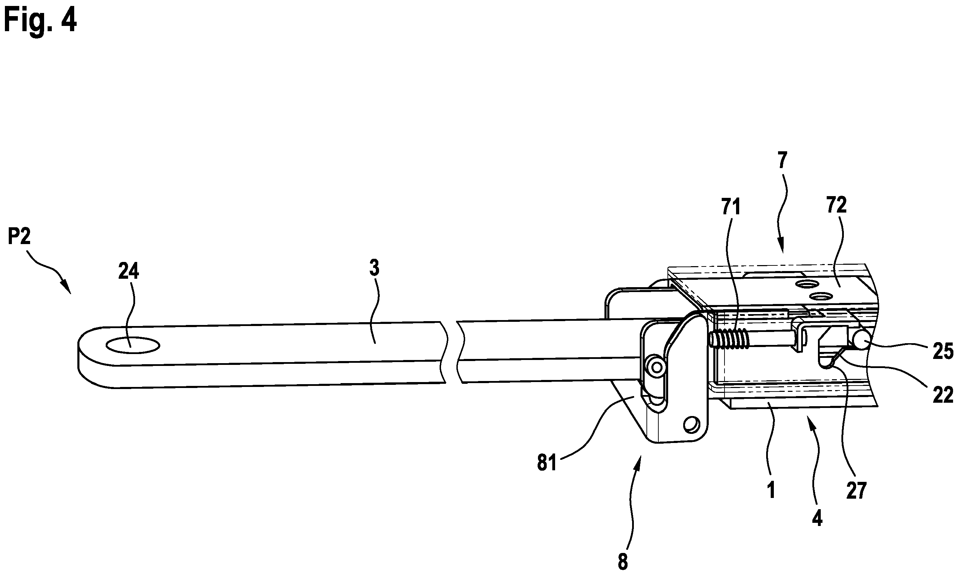

Im Detail zeigt Figur 1 ein System 100 mit einer Anhängevorrichtung 1. Die Anhängevorrichtung 1 weist ein erstes Teil 2 in Form eines im Wesentlichen hohlen Quaders auf. In dem ersten Teil 2 ist ein zweites Teil 3 verschieblich gelagert. Das zweite Teil 3 kann dabei zwischen einer ersten eingefahrenen Position P1 (siehe Figur 3) und einer ausgefahrenen und mittels einer Halteeinrichtung 4 lösbar arretierbaren Position P2 (siehe auch Figur 4) verschoben werden. Darüber hinaus weist das System 100 eine Aufnahmevorrichtung 50 an der dem zweiten Teil gegenüberliegenden Seite des Systems 100 auf. Die Aufnahmevorrichtung 50 dient dazu, ein zweites Teil einer Aufnahmevorrichtung eines weiteren Systems zur Kopplung der beiden Systeme aufzunehmen. Um das System 100 an einem Wagen, insbesondere auf dessen Unterseite, festzulegen, weist die Anhängevorrichtung 1 zudem auf der Oberseite des ersten Teils 2 zwei flächig ausgebildete Festlegungsbereiche 5, 6 auf.

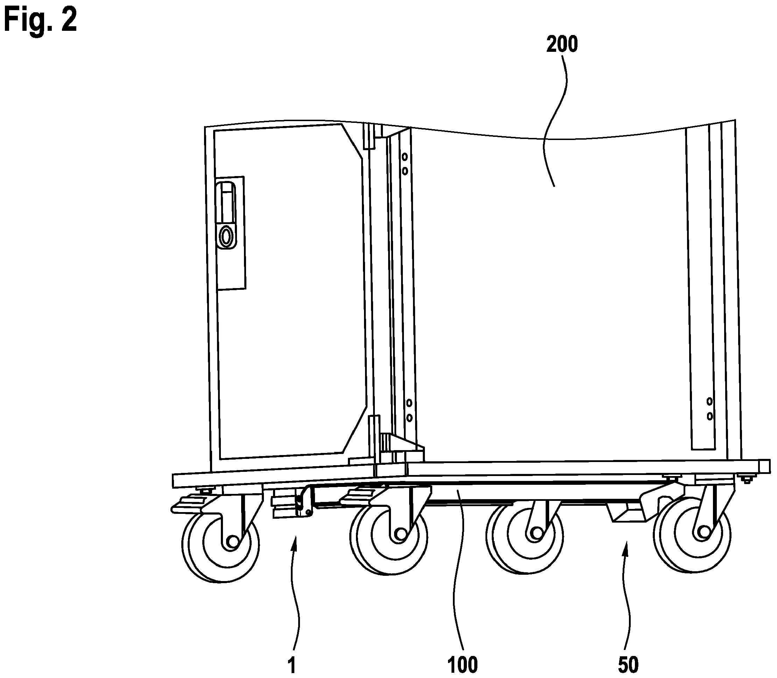

Figur 2 zeigt einen Wagen gemäß einer Ausführungsform der vorliegenden Erfindung.

Figur 2 zeigt einen Wagen 200 zum Transport von Waren. Das System 100 ist hierbei auf der Unterseite des Wagens 200 angeordnet, sodass die Anhängevorrichtung 1 und die Aufnahmevorrichtung 50 von gegenüberliegenden Seiten des Wagens 200 zugänglich sind.

Figur 3 zeigt eine Anhängevorrichtung gemäß einer Ausführungsform der vorliegenden Erfindung mit zweitem Teil in der ersten Position und Figur 4 zeigt die Anhängevorrichtung gemäß Figur 3 mit zweiten Teil in der zweiten Position.

Figur 3 zeigt nun eine Anhängevorrichtung 1 mit einem in der ersten eingeschobenen Position P1 zweiten Teil 3. An seinem in dem ersten Teil 2 befindlichen Ende weist das zweite Teil 3 bolzenförmige Vorsprünge 25 senkrecht zur Ausziehrichtung des zweiten Teils 3 auf. Auf der gegenüberliegenden Seite des zweiten Teils 3 weist das zweite Teil eine Bohrung 24 auf zum Eingriff in einen Bolzen einer Aufnahmevorrichtung eines anderen Systems. Diese Vorsprünge 25 gleiten im inneren des ersten Teils 2 auf jeweils gegenüberliegenden Schienen 23 von der ersten Position P1 zu der zweiten Position P2. In der ersten Position P1 werden die Bolzen 25 über eine entgegen der Ausziehrichtung des zweiten Teils 3 abfallende Schräge 21 gesichert. Durch entsprechende Kraft bei Ausziehen des zweiten Teils 3 wird die Schräge 21 überwunden. In der ausgezogenen zweiten Position P2 ist der zweite Teil 3 durch eine Halteeinrichtung 4, umfassend eine halbkreisförmige Ausformung 27, gesichert, über die der Bolzen 25 über eine in Ausziehrichtung abfallende Schräge 22 gleitet. Um das zweite Teil 3 in der ausgezogenen Position P2 zu sichern, ist eine Sicherung 7 angeordnet, die mit Federkraft einer Feder 71 beaufschlagt ist. Um das zweite Teil 3 in die Ausformung 27 zu verbringen, wird die Sicherung 7 entgegen der Federkraft in Ausziehrichtung bewegt, sodass die mittels des Sicherungselements 72 verschlossene Ausformung 27 samt Schräge 22 durch die Sicherung 7 freigegeben wird. Hierzu wird das Sicherungselement 72, welches die Schräge 22 samt Ausformung 27 verschließt, durch die Bolzen 25 in Ausziehrichtung entgegen der Federkraft bewegt und gibt so die Ausformung 27 und Schräge 22 frei, sodass der Bolzen 25 über die Schräge 22 in die Ausformung 27 gleiten kann. Durch die Federkraft der Feder 71 bewegt sich anschließend das Sicherungselement 72 zurück in die Ausgangsstellung und verschließt somit Ausformung 27 und Schräge 22.

Darüber hinaus ist mit dem Sicherungselement 72 ein Freigabeelement 81 einer Freigabeeinrichtung 8 verbunden, welches beim Verkippen des zweiten Teils 3 um die Horizontalachse in der ausgezogenen Position P2 das Sicherungselement 72 entgegen der Federkraft bewegt und so die Ausformung 27 und die Schräge 22 freigibt. Durch die Bolzen 25 kann das zweite Teil 3 um die Horizontalachse teilweise geschwenkt werden, ohne dass die Sicherung 7 betätigt wird.

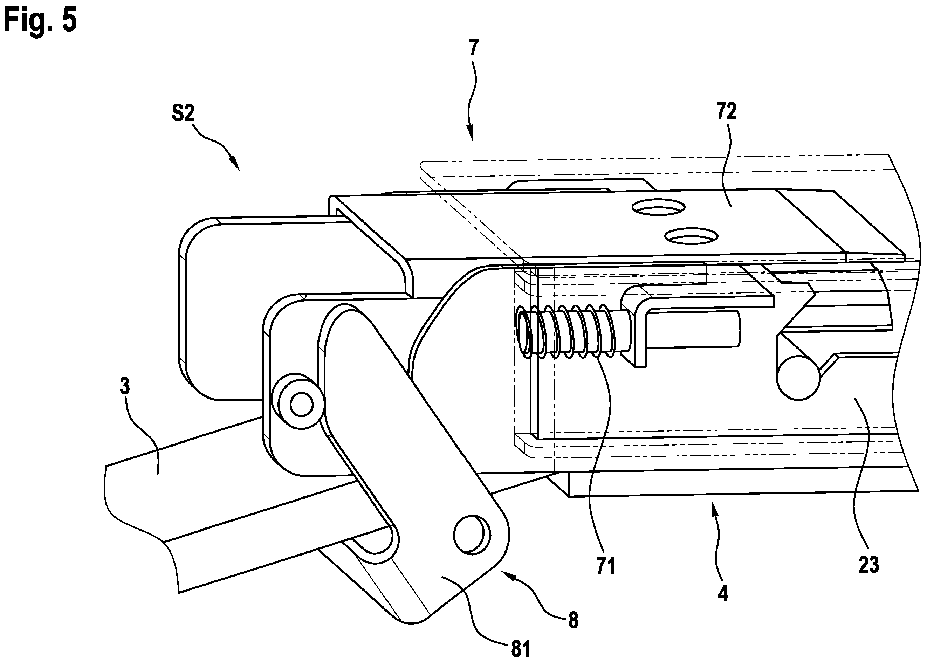

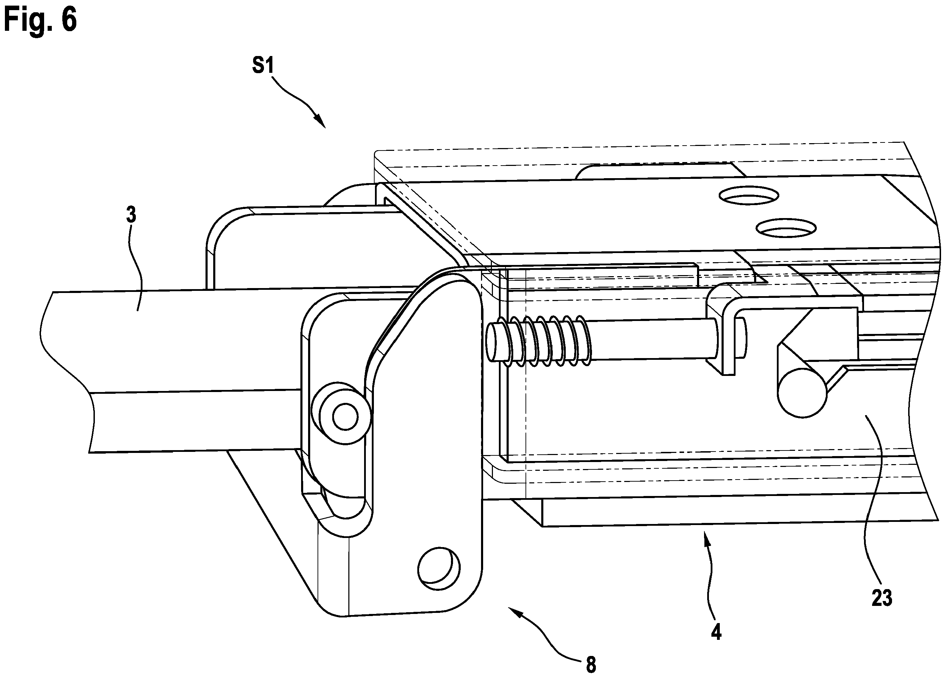

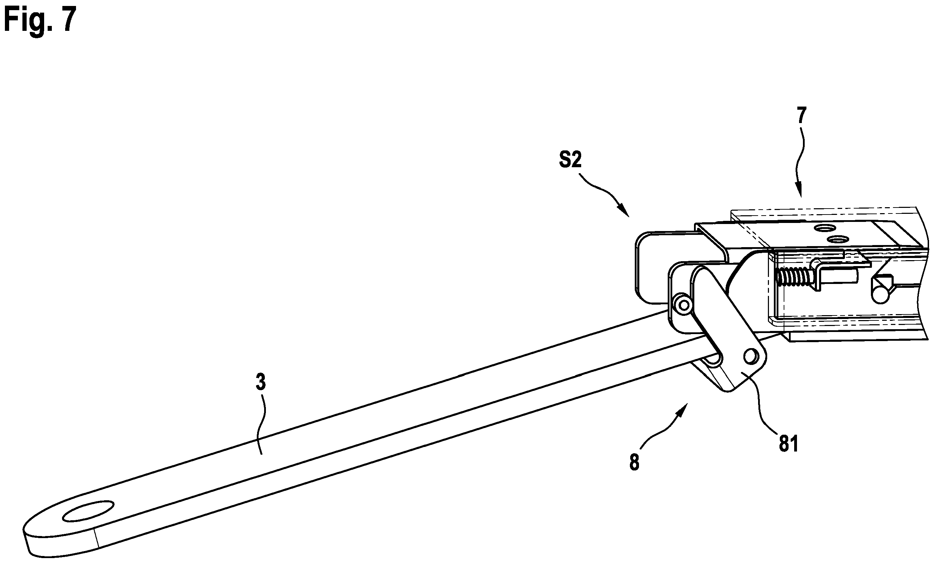

Figur 5 zeigt eine Sicherung gemäß einer Ausführungsform der vorliegenden Erfindung in ihrer geöffneten Position, Figur 6 zeigt die Sicherung gemäß Figur 5 in ihrer geschlossenen Position und Figur 7 zeigt die Anhängevorrichtung gemäß einer Ausführungsform der vorliegenden Erfindung während des Öffnens der Sicherung.

In den Figuren 5-7 ist im Wesentlichen die Anhängevorrichtung 1 gemäß der Figuren 3 und 4 im vorderen Bereich von erstem und zweitem Teil 2, 3 gezeigt. Das Freigabeelement 81 wird dabei durch das Verschwenken des zweiten Teils 3 nach unten bewegt. Gleichzeitig wird durch die L-Form des Freigabeelements 81 im Querschnitt der längere Teil nach vorne gedrückt und schiebt das Sicherungselement 72 entgegen der Federkraft der Feder 71 nach vorne und gibt so die Ausformung 27 und die Schräge 22 frei, sodass das zweite Teil 3 in die erste Position verschiebbar ist. Das Freigabeelement 81 bildet also einen Kipphebel, der das Sicherungselement 72 in Ausziehrichtung des zweiten Teils 3 zieht und den Weg für den Bolzen 25 in der Ausformung 27 freigibt.

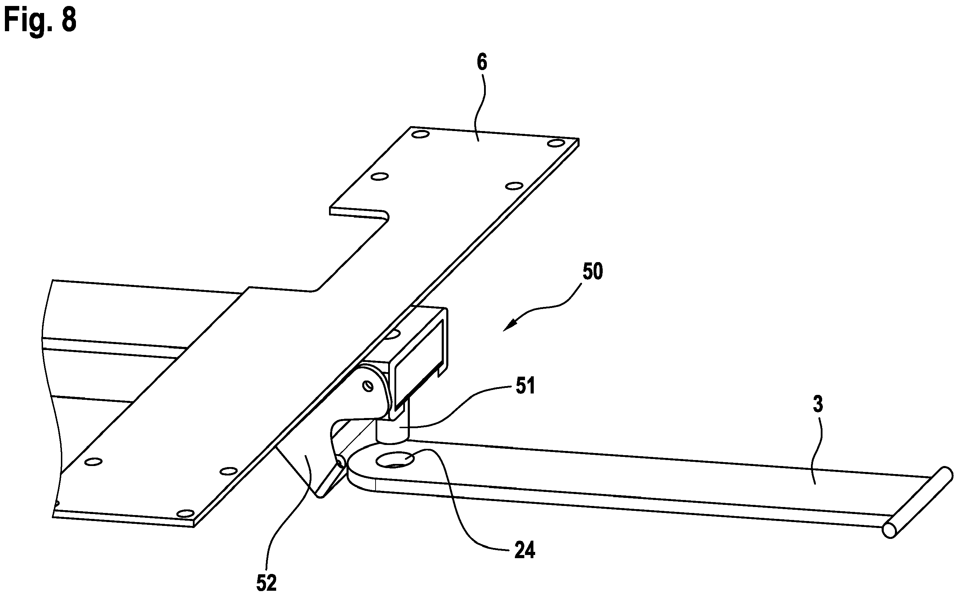

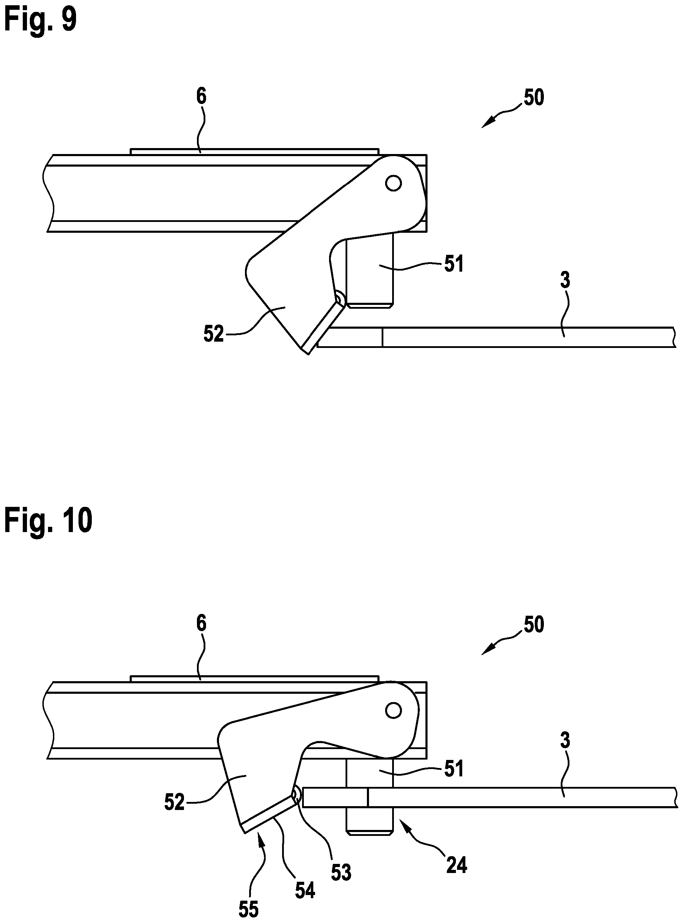

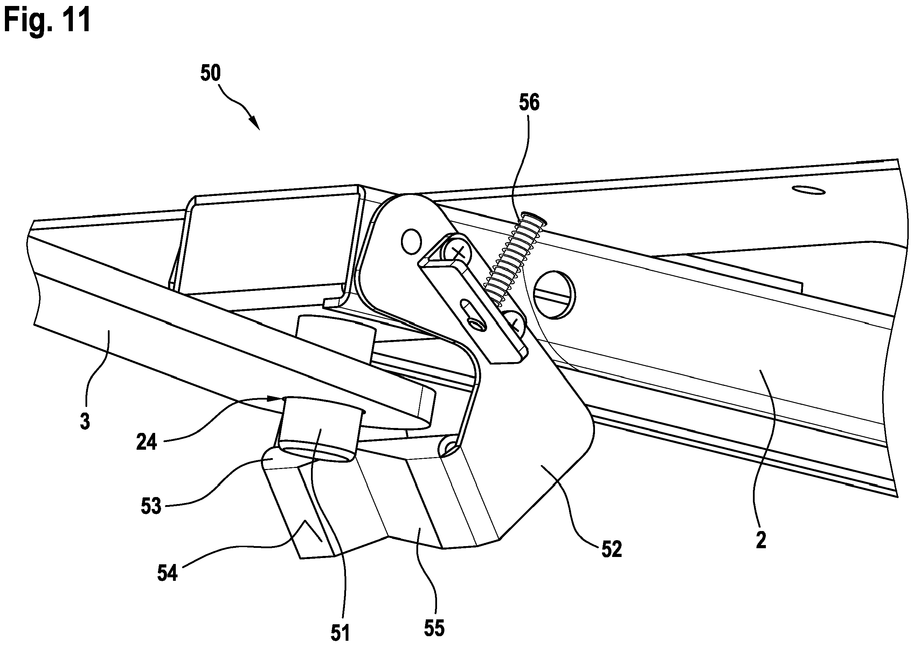

Figur 8 zeigt eine Aufnahmevorrichtung gemäß einer Ausführungsform der vorliegenden Erfindung, Figur 9 eine Aufnahmevorrichtung gemäß einer Ausführungsform der vorliegenden Erfindung während des Festlegens des zweiten Teils und Figur 10 die Aufnahmevorrichtung gemäß Figur 9 mit festgelegtem zweiten Teil an der Aufnahmevorrichtung. Figur 11 zeigt weiter die Aufnahmevorrichtung gemäß den Figuren 9 und 10 mit festgelegtem und gesichertem zweiten Teil an der Aufnahmevorrichtung.

In den Figuren 8-10 ist eine Aufnahmevorrichtung 50 gezeigt, welche einen in vertikaler Richtung nach unten ragenden, insbesondere abgerundeten, Bolzen 51 aufweist, der mit einer Bohrung 24 eines zweiten Teils 3 einer Anhängevorrichtung zu dessen Festlegung korrespondiert. Darüber hinaus ist ein um eine horizontale Achse verschwenkbar angeordnetes Kupplungsblech 52 angeordnet, welches beim Verbringen des zweiten Teils 3, genauer dem Überstülpen der Bohrung 24 über den Bolzen 51, nach hinten (in Figur 9 nach links weg vom Bolzen 51) geschoben wird. Das Kupplungsblech 52 ist federbelastet und versperrt in seiner Ausgangsstellung den Bolzen 51. Beim Ankuppeln des zweiten Teils 3 trifft dieses auf das Kupplungsblech 52 und schwenkt beziehungsweise drückt dieses entgegen der Federkraft nach hinten und das zweite Teil 3 kann von unten in vertikaler Richtung über Anheben mit dem Bolzen 51 gekuppelt werden. Danach schwenkt das Kupplungsblech 52 wieder in seine Ausgangsstellung über den Bolzen 51 und sichert so das Festlegen des zweiten Teils 3 an dem Bolzen 51.

In Figur 10 ist im Detail nochmals das Kupplungsblech 52 dargestellt. Das Kupplungsblech 52 weist im Wesentlichen eine L-Form auf, wobei das Kupplungsblech 52 an dem längeren Schenkel drehbar angeordnet ist. An dem kürzeren Schenkel senkrecht zu dessen Erstreckung ist eine Gleitfläche 54 angeordnet, die sich parallel zur Drehachse erstreckt. Im oberen Bereich der Gleitfläche 54 weist diese einen abgerundeten Bereich 53 auf, der aus einem anderen, insbesondere geräuschdämpfendem, Material hergestellt sein kann. Darüber hinaus kann in der Gleitfläche 54 eine Führungsvertiefung 55 (siehe Figur 11) angeordnet sein, die zur Vorderkante des zweiten Teils 3 korrespondieren kann und eine Unterstützung beim Kuppeln der Bohrung 24 und Bolzen 51 bereitstellen kann.

In Figur 11 ist nun die Feder 56 gezeigt, die einerseits mit dem ersten Teil 2 verbunden ist, andererseits mit dem Kupplungsblech 52 über einen an dem Kupplungsblech 52 verschraubten Vorsprung.

Zusammenfassend weist zumindest eine der Ausführungsformen der Erfindung zumindest eines der folgenden Merkmale und/oder einen der folgenden Vorteile auf:
- Einfache, kostengünstige Herstellung.
- Einfache Bedienung.
- Erhöhte Sicherheit bei der Kupplung mehrerer Wagen.
- Zuverlässige lösbare Kupplung mehrerer Wagen.
- Einfache und platzsparende Aufbewahrung der Aufnahmevorrichtung.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Anhängevorrichtung
- 2: Erstes Teil
- 3: Zweites Teil
- 4: Halteeinrichtung
- 5: Festlegungsbereich
- 6: Festlegungsbereich
- 7: Sicherung
- 8: Freigabeeinrichtung
- 21: Schräge
- 22: Schräge
- 23: Schiene
- 24: Bohrung
- 25: Bolzen/Vorsprung
- 27: Ausformung
- 50: Aufnahmevorrichtung
- 51: Bolzen
- 52: Kupplungsblech
- 53: Abgerundeter Bereich
- 54: Gleitfläche
- 55: Führungsvertiefung
- 56: Feder
- 71: Feder
- 72: Sperr-/Sicherungselement
- 81: Kipphebel/Freigabeelement
- 100: System
- 200: Wagen
- P1: Eingefahrene Position
- P2: Ausgefahrene Position
- S1: Sicherungsposition
- S2: Offenposition

## Patentansprüche

1. Anhängevorrichtung (1) zur Festlegung an einem Wagen (200), umfassend
ein erstes Teil (2), welches mit dem Wagen (200) verbindbar ist, und
ein zweites Teil (3), welches an einem weiteren Wagen (200) festlegbar ist, wobei das zweite Teil (3) relativ zum ersten Teil (2) zwischen einer ersten eingefahrenen Position (P1) und einer zweiten ausgefahrenen Position (P2) verschiebbar ist und wobei
eine Halteeinrichtung (4) angeordnet ist, welche ausgebildet ist, das zweite Teil (3) in der zweiten Position (P2) zu halten,
**dadurch gekennzeichnet, dass**
eine bewegbare Sicherung (7) angeordnet ist, welche ausgebildet ist, die Halteeinrichtung (4) lösbar zu sichern, sodass bei Einwirken von Längsdruckkräften auf den zweiten Teil (3), der zweite Teil (3) in der zweiten Position (P2) gehalten wird, vorzugsweise wobei
die Sicherung (7) so ausgebildet ist, dass diese bei Verbringen des zweiten Teils (3) in die zweite Position (P2) zur Sicherung der Halteeinrichtung (4) betätigt wird.

2. Anhängevorrichtung (1) gemäß Anspruch 1, **dadurch gekennzeichnet, dass** die Sicherung (7) manuell lösbar ausgebildet ist.

3. Anhängevorrichtung (1) gemäß einem der Ansprüche 1-2, **dadurch gekennzeichnet, dass** die Sicherung (7) ausgebildet ist, durch Betätigung des zweiten Teils (3), insbesondere durch Verkippen, die Halteeinrichtung (4) freizugeben, sodass der zweite Teil (3) in die erste Position (P1) verschiebbar ist, und/oder dass die Sicherung (7) zumindest eine Feder (71) aufweist, zum lösbaren Halten der Sicherung (7) in ihrer Sicherungsposition (S1), vorzugsweise wobei
die Sicherung (7) derart ausgebildet ist, dass beim Verschieben des zweiten Teils (3) in die zweite Position (P2), die Sicherung (7) entgegen der Federkraft der zumindest einen Feder (71) zum Lösen betätigt wird.

4. Anhängevorrichtung (1) gemäß einem der Ansprüche 1-3, **dadurch gekennzeichnet, dass** die Halteeinrichtung (4) eine Aufnahme (23) aufweist zum formschlüssigen Aufnehmen zumindest eines ersten Teilbereiches des zweiten Teils (3) und wobei mittels der Sicherung (7) die Aufnahme (23) lösbar verschließbar ist.

5. Anhängevorrichtung (1) gemäß einem der Ansprüche 1-4, **dadurch gekennzeichnet, dass** eine Rückhalteeinrichtung (21) für die erste Position (P1) angeordnet ist, vorzugsweise wobei
die Rückhalteeinrichtung (21) in Form einer Senke ausgebildet ist, in die zumindest ein zweiter Teilbereich des zweiten Teils (3) eingreift, insbesondere wobei erster (2) und zweiter Teil (3) einen gemeinsamen Teilbereich bilden.

6. Anhängevorrichtung (1) gemäß einem der Ansprüche 4 oder 5, **dadurch gekennzeichnet, dass** erster Teilbereich und/oder zweiter Teilbereich in Form eines Bolzens (25) ausgebildet sind.

7. Anhängevorrichtung (1) gemäß einem der Ansprüche 1-6, **dadurch gekennzeichnet, dass** das zweite Teil (3) eine Aussparung (24) zum Eingriff eines Elements einer Aufnahmevorrichtung (50) aufweist, insbesondere in Form eines Bolzens (51).

8. Aufnahmevorrichtung (50) zur Aufnahme eines zweiten Teils (3) einer Anhängevorrichtung (1) gemäß einem der Ansprüche 1-7, **dadurch gekennzeichnet, dass** die Aufnahmevorrichtung (50) und der zweite Teil (3) der Anhängevorrichtung (1) zur formschlüssigen lösbaren Festlegung aneinander ausgebildet sind, vorzugsweise wobei
eine bewegbare Aufnahmesicherungseinrichtung (8) zur insbesondere formschlüssigen Sicherung der Aufnahmevorrichtung (50) angeordnet ist.

9. Aufnahmevorrichtung (50) gemäß Anspruch 8, **dadurch gekennzeichnet, dass** die Aufnahmesicherungseinrichtung (8) so angeordnet ist, sodass diese bei Verbringen des zweiten Teils (3) der Anhängevorrichtung (1) in die Aufnahmevorrichtung (50) betätigt wird, insbesondere entgegen einer Federkraft zumindest einer Feder (56).

10. Aufnahmevorrichtung (50) gemäß einem der Ansprüche 8-9, **dadurch gekennzeichnet, dass** die Aufnahmevorrichtung (50) so ausgebildet ist, dass das Festlegen des zweiten Teils (3) an der Anhängevorrichtung (1) entgegen der Richtung der Schwerkraft erfolgt, und/oder dass die Aufnahmevorrichtung (50) zumindest einen Bereich (53) aufweist, der mit geräuschdämpfendem Material, insbesondere aus Kunststoff, versehen oder daraus hergestellt ist, und der insbesondere so angeordnet ist, dass dieser zumindest zeitweise während der Festlegung des zweiten Teils (3) der Anhängevorrichtung (1) an der Aufnahmevorrichtung (50) von dem zweiten Teil (3) beaufschlagt wird.

11. Aufnahmevorrichtung (50) gemäß einem der Ansprüche 8-10, **dadurch gekennzeichnet, dass** die Aufnahmesicherungseinrichtung (8) eine Fläche (54) zur Lösung derselben aufweist, insbesondere ausgebildet zur Betätigung mit einem Fuß.

12. System (100), umfassend eine Anhängevorrichtung (1) gemäß einem der Ansprüche 1-7 und eine Aufnahmevorrichtung (50) gemäß einem der Ansprüche 8-11, vorzugsweise wobei
die Anhängevorrichtung (1) und Aufnahmevorrichtung (50) in einem einzigen Bauteil angeordnet sind.

13. System (100) gemäß Anspruch 12, **dadurch gekennzeichnet, dass** zumindest eine der beiden Vorrichtungen (1, 50), insbesondere beide Vorrichtungen (1, 50), als Modul für einen Wagen (200) nachrüstbar sind.

14. Wagen (200) zum Transport von Gütern und dergleichen, umfassend eine Anhängevorrichtung (1) gemäß einem der Ansprüche 1-7 und/oder eine Aufnahmevorrichtung (50) gemäß einem der Ansprüche 8-11, insbesondere wobei die Anhängevorrichtung (1) und/oder die Aufnahmevorrichtung (50) auf einer Unterseite des Wagens (200) angeordnet ist, vorzugsweise wobei sich diese entlang der gesamten Unterseite des Wagens (200) erstreckt.

15. System aus zumindest zwei Wagen (200) gemäß Anspruch 14, die mittels des zweiten Teils (3) der Anhängevorrichtung (1) des einen der zumindest zwei Wagen (200) an der Aufnahmevorrichtung (1) des anderen der zumindest zwei Wagen (200) gekoppelt sind.
